(19) Europäisches Patentamt
European Patent Office
Office européen des brevets

(11) **EP 2 627 040 B1**

(12) **EUROPEAN PATENT SPECIFICATION**

(45) Date of publication and mention
of the grant of the patent:
**28.02.2018 Bulletin 2018/09**

(51) Int Cl.:
***H04L 12/26*** *(2006.01)*

(21) Application number: **12175459.2**

(22) Date of filing: **06.07.2012**

(54) **Method for eliminating systematical error components in a set of one-way delay measurement results for communications between two or more computing systems in a communication network, apparatus for performing the method and computer program product**

Verfahren zum Beseitigen von systematischen Fehlerkomponenten in einem Satz aus Einweg-Verzögerungsmessergebnissen für Kommunikationen zwischen zwei oder mehr Computersystemen in einem Kommunikationsnetzwerk, Vorrichtung zur Durchführung des Verfahrens und Computerprogrammprodukt

Procédé pour éliminer des composants d'erreur systématique dans un ensemble de résultats de mesure de retard unidirectionnel pour des communications entre au moins deux systèmes informatiques dans un réseau de communication, appareil pour réaliser le procédé et produit de programme informatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2012 EP 12000907**

(43) Date of publication of application:
**14.08.2013 Bulletin 2013/33**

(73) Proprietor: **Hochschule Anhalt (FH)**
**06366 Köthen (DE)**

(72) Inventors:
• **Siemens, Prof. Eduard**
**31319 Sehnde (DE)**
• **Bakharev, Aleksandr**
**06366 Köthen (DE)**

(74) Representative: **Schäferjohann, Volker et al**
**Rittner & Partner**
**Patentanwälte mbB**
**Schiffgraben 17**
**30159 Hannover (DE)**

(56) References cited:
**WO-A1-2006/033611      WO-A1-2008/138850**
**US-A1- 2010 185 781**

• **ANDERSON E ET AL: "Efficient tracing and performance analysis for large distributed systems", MODELING, ANALYSIS&SIMULATION OF COMPUTER AND TELECOMMUNICATION SYSTEMS, 2009. MASCOTS '09. IEEE INTERNATIONAL SYMPOSIUM ON, IEEE, PISCATAWAY, NJ, USA, 21 September 2009 (2009-09-21), pages 1-10, XP031640234, ISBN: 978-1-4244-4927-9**

**Description**

Background of the Invention

In many distributed computing applications and in particular for real time applications in packet switched networks, it is of great importance to accurately match information to a reference time, for example the time at which this information has been produced. For example, in a packet based network, data may be produced in real time e.g. in a data streaming application like audio and/or video streaming by a sending network component to be transmitted to a receiving network component for further procuring. For this purpose, the data is scattered into data packets each containing parts of the data, and submitted to the receiving network component, where the data parts are assembled.

Due to variations in transmission paths and in queuing holdup, the transmission delays experienced by the different packets can vary considerably in a non-deterministic way. In extreme cases, a packet sent earlier may arrive at a later time than one that was sent later. In order for the receiving network component to be able to process the packets correctly, a time stamp may be attached to each packet at the transmitting end, corresponding to a reference time for the enclosed data part. In this case, the receiving network component will be able to match the data parts accurately to the corresponding reference times.

Furthermore, flow control as well as congestion control of transport protocols heavily rely on measured round trip times (RTT) and/or transition times (one-way delays, OWDs) of data packets exchanged between a sending network component or sender and a receiving network component or receiver. Since supplying reference time information, for example in the form of time stamps, takes some constant or variable amount of time, estimation of transfer time of information exchanged between the sender and the receiver is the main issue of time synchronization on packet switched networks. To address this issue, the so called Network Time Protocol (NTP), which is disclosed in detail in D.L. Mill,"The Network Time Protocol (Version 3) Specification, Implementation and Analysis", RFC 1305, IEFT, March 1992, has been designed to synchronize local clocks of network components over a packet switched network.

The core component of NTP is a clock offset calculation routine based on the so called Cristian Algorithm (CA), which will be summarized in the following. A requesting network component sends a data packet containing a time request to a replying network component at a sending time $T_S$. The replying network component answers as fast as possible and sends back a receive time stamp $T_R$ enclosed in a reply packet, which is received at a reply receive time $T_{RR}$. From these time values a forward transition delay or one-way delay in forward direction ($OWD_f$) and a backward transition delay or one-way delay in backward direction ($OWD_b$) are calculated as $OWD_f = T_R - T_S$ and $OWD_b = T_{RR} - T_R$. Further, it is assumed that the actual one-way delays in both directions are equal, such that a difference between $OWD_f$ and $OWD_b$ is attributed solely to an offset between the clock of the requesting network component and the clock of the replying network component. This synchronisation offset is calculated as $(OWD_f - OWD_b)/2$. Various aspects for implementing this type of solution are described in US 6 769 029 B1.

There is an improved Cristian algorithm known in the prior art WO 2008/138850 A1 which takes into account the asymmetric delay variations in network communication where the transport of data in forward direction from sender to receiver takes a different amount of time than the transport of data in the backward direction from receiver to the sender. Asymmetries may result from asymmetric propagation delays as well as asymmetric instant cumulated queuing delays in forward and backward direction. Asymmetric propagation delays may happen in symmetrical network technologies like Ethernet or ATM when routing the packets in forward and backward direction over different network paths for example. Also queuing delays may cause asymmetries between forward and backward direction and may have a significant effect. In the improved Cristian algorithm both directions are treated separately as determining a set of forward transition delays for the transmission of messages in forward direction and an independent set of backward transition delays for the transmission of messages in backward direction. An estimated value for an offset between the clocks of the two network components is derived from the selected minimum forward transition delay and minimum backward transition delay in combination.

Common to all these state of the art solutions, see also US 6 438 702 B1, is the application of Cristian Algorithm (CA) or Improved Cristian Algorithm (ICA) to measurements of one-way-delays or round-trip-times at the beginning of a delay measurement period, only. With this approach it is however not possible to compensate also the relative clock skew in the used computing systems.

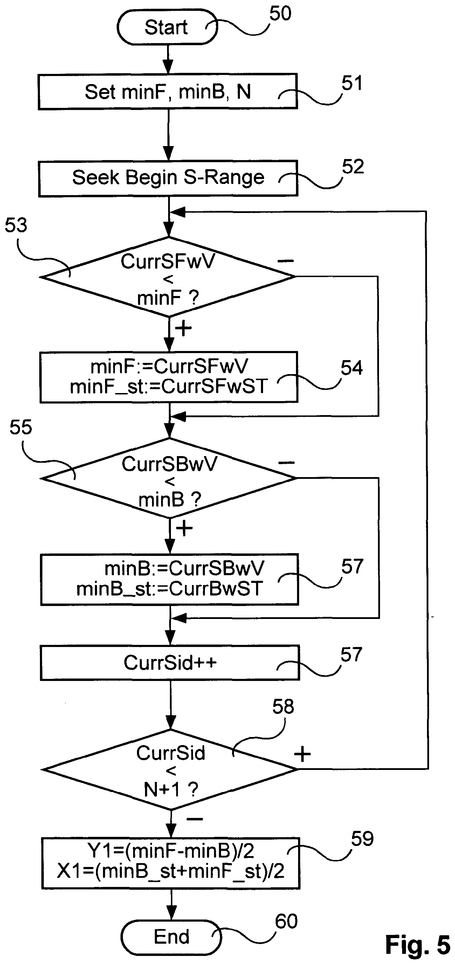

From US 2010/0185781 it is known a method for eliminating clock skew values in a set of round trip time RTT measurement values. The proposed method to determine the clock skew values however is based on performing a fitting operation with a plurality of RTT measurement values. This fitting operation is based on determining the least squares of the skew values. This type of method therefore corresponds to a section-wise linear regression operation as seen in Fig. 5.

From Anderson E; Hoover C; Xiaozhou Li; Tucek J, XP031640234 "Efficient tracing and performance analysis for large distributed systems", Modeling, Analysis&Simulation of Computer and Telecommunication Systems, 2009. MASCOTS '09. IEEE International Symposium on, 20090921 IEEE, Piscataway, NJ, USA - ISBN 978-1-4244-4927-9 ;

ISBN 1-4244-4927-8 it is known a method for eliminating clock skew values in a set of round trip time RTT measurement values. The proposed method concerns the same solution known from US 2010/0185781.

The Invention

Although an application of the CA or even ICA can estimate the relative clock offset between two computing systems at a given point in time very well, this offset is changing all over the time, mainly due to the inaccuracy of the frequency of each local clock oscillator (so called clock skew or relative clock skew between two systems). Other effects may cause clock skew: e.g. run time differences due to different conductor lengths, temperature varitations, material defects, capacitive coupling, and electromagnetic interference. Some of these effects make up tolerances in the electronic circuits. This may be frequency dependent, so for different components of the transmission signal there may be propagation differences existing. However, the timely changing measurement error, caused by the clock skew is overlaid by the one-way-delay of data packets, used for OWD measurements. These delays are variable especially at packet switched networks and at non-real-time operating systems. So on the measurement result data sets, the delay components, caused by network- and processing delays can't be easily separated from the delay part, caused by a changing clock offset (clock skew).

Thus it is an objective of the invention to provide a solution, such that a more accurate clock offset determination between clocks of at least two different network components in a network can be achieved.

There is the problem of relative clock skew between two or more computing systems, which impacts the measurement of one-way or round-trip-time delays of the used systems. On the contemporary commodity PC systems for example, the accuracy of each clock oscillator is about $10^{-5}$. With the proposed solution the accuracy can be improved by elimination of the systematic error up to $10^{-7}$ - $10^{-8}$. Said clock skew may be caused mainly by material tolerances of clock oscillators, and by temperature deviations of the environment of the clock oscillators.

The solution according the invention is based on a heuristic combination of methods - the repeated application of the determination of a clock offset between two stations in the network with the help of the ICA process for the estimation of points in time between which a linear interpolation of measurement results will be applied.

Another aspect of the invention lies in the exact presentation of the parameters for the linear interpolation solution.

The invention describes a solution of elimination of the *systematical error* in one-way delay (OWD) measurements between two or more computing systems. In one embodiment the proposed invention extends the recent state of the art of high-precision OWD measurements, based on application of the Improved Cristian Algorithm (ICA) and so brings the advantage of elimination of the first derivative of the time difference between two systems (known as relative clock skew) by means of applying linear interpolation to one-way delay measurement results at each measurement point. Hereby the determination of the position within a measurement set, at which the ICA algorithm has to be applied, and also the particular parameterization of the linear interpolation of one-way delay measurement sets are proposed according to this invention, which have a significant impact to the accuracy of the measurement results.

The objective is met by a method for eliminating systematical error components in a set of one-way delay measurement results for communications between two or more computing systems according to independent claim 1, an apparatus according to independent claim 6, and a computer program product according to claim 7.

In one embodiment the systematic error, caused by the mid- and long-term clock skew is corrected by means of application of the linear interpolation on measured results between fixed points in time, determined by means of Improved Cristian Algorithm (ICA) with parameters of linear interpolation, calculated on the basis of the applied ICA.

For this embodiment also the parameters of the linear interpolation are provided. By this means the mid-term accuracy of the OWD measurements can be improved from $10^{-5}$ to $10^{-7}$ - $10^{-8}$ on standard PC hardware and on non-realtime operating systems.

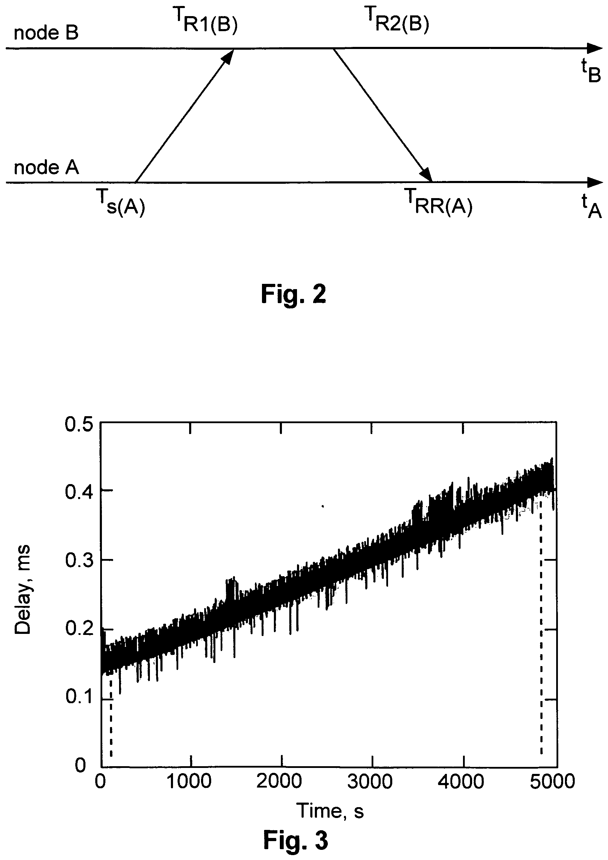

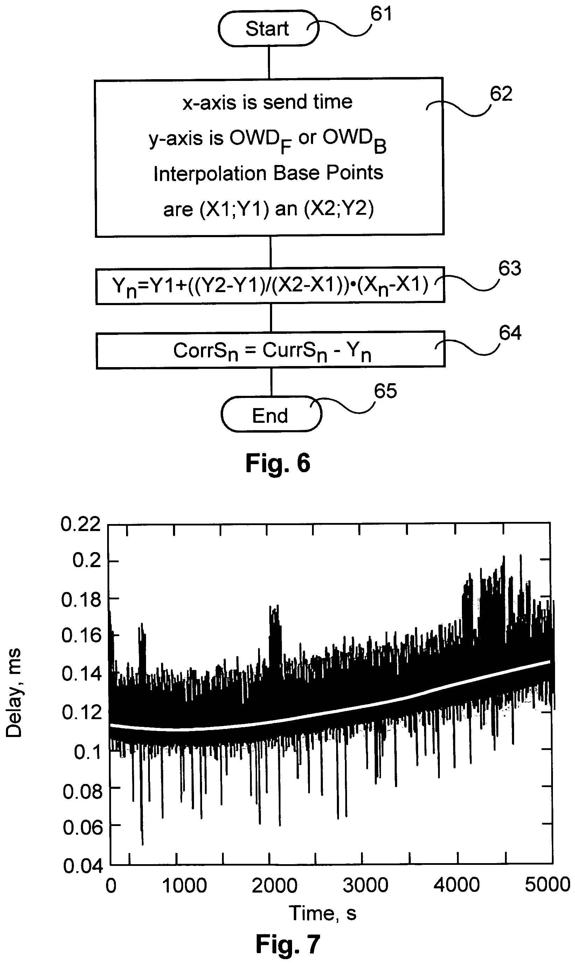

The improvement of the accuracy of the measurement results is shown with the two figures Fig. 3 and Fig. 7. Fig. 3 shows raw (uncorrected) measurement results over a direct connection without any active components in between. The gradient of the baseline is caused by the relative clock skew. On Fig. 7, corrected results using the proposed invention are presented. Now it is possible to zoom into the measurement set much more detailed, so the scale of the ordinate on the Fig. 7 is much finer.

According to a further aspect of the invention, an apparatus is provided that is adapted to perform the method according the invention. Such apparatus is equipped with analyzing means for analysing a set of one-way delays for a measurement interval, and calculating an estimate for a clock synchronisation offset one at the beginning and one at the end of the measurement interval, interpolation means which perform interpolation between the two clock synchronisation offset values at the beginning and at the end of the measurement interval for the sample values in the measurement interval and correction means which deduct the respective interpolation value from the respective actual sample value in the measured one-way delay value set.

# EP 2 627 040 B1

<u>Drawing</u>

In the following, the invention will be described by means of advantageous embodiments with reference to figures of a drawing. Herein:

Fig. 1    shows the principle structure of a network with a plurality of hosts communicating with each other by means of data packets;

Fig. 2    shows a timing diagram, depicting time delays experienced by packets sent between network nodes A and B;

Fig. 3    shows a large set of one-way delay measurement results for a time period of 5000 s experienced by packets sent between network nodes A and B in the forward direction;

Fig. 4    shows the geometrical operation of shearing in application on the set of measurement results shown in Fig. 3. This is illustrating what the linear interpolation does geometrically;

Fig. 5    shows a flow chart for a computer routine which determines a reference point in the set of measurement results needed for the interpolation to be performed;

Fig. 6    shows a flow chart for a computer routine which performs the interpolation between reference points in the set of measurement results according to the invention; and

Fig. 7    shows the time corrected set of one-way delay measurement results for the forward direction for the same set as in Fig. 3 in accordance with the embodiment of the invention with linear interpolation between reference points at the beginning and end of the set of measurement results.

<u>Embodiments - detailed description of the invention</u>

This invention provides an ability to localize and get rid of systematical error within processing of network delay measurement results. Since error elimination is out of experiment procedure, it is a pure software solution and independent of the experiment process itself.

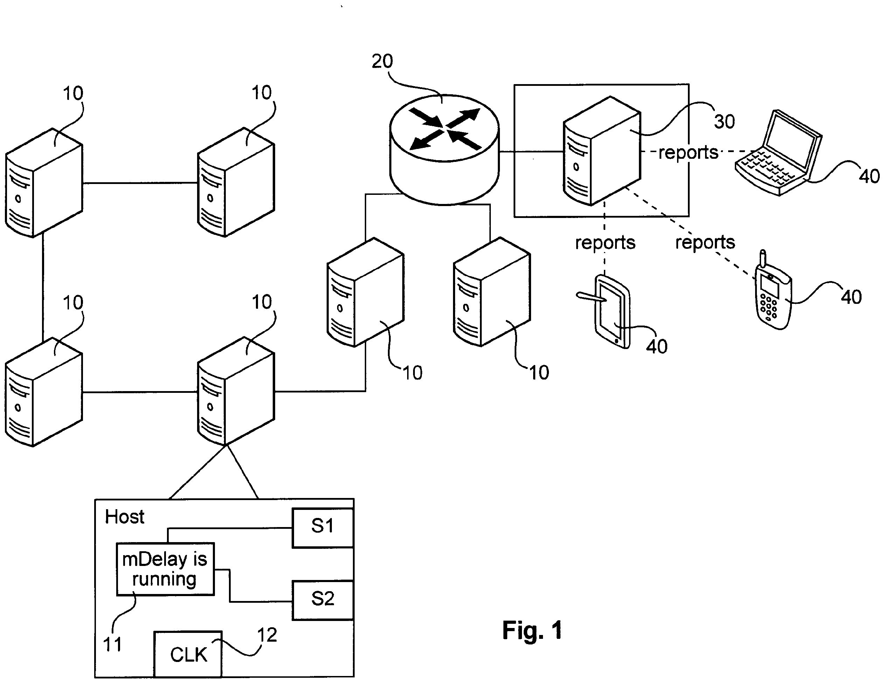

Fig. 1 shows the principle structure of a network. In the example of Fig. 1 there are a plurality of hosts 10 interconnected in a network. Connected to the switching / routing device 20 is a network monitoring server 30. Network monitoring report messages can be transmitted wirelessly to portable display devices 40. On each host 10 there is a process running, called mDelay. This process will be described in detail below. The process is communicating with other network stations via two sockets S1 and S2. S1 is set up for communications to other mDelay demons on other hosts 10. S2 is set up for communications to the network monitoring server 30.

Generally, an experiment scenario is the following: Two hosts 10 connected via the network are used to measure network delay values (e.g. RTT values) between them (client and server) with the highest possible accuracy. The mentioned systematical error within network delay measurement is caused by the negative influence of an existing difference between quartz oscillator frequencies on the two machines, participating in experiment as client and server. Quartz oscillators lay on processor low level so that, any drift in the frequency stability of such a quartz-based clock generator will directly affect time parameters on the machine (processor based timers, e.g. TSC (Time Stamp Counter) or HPET (High Precision Event Timer)).

In Fig. 2 node A and node B being part of the network in Fig. 1 are connected over network connections and communicate via data packets, for example in an Internet environment with TCP/IP protocol or RTP/UDP/IP protocol.

Fig. 2 shows a timing diagram for data packets sent between nodes A and B. A time line with the time variable $t_A$ belongs to a clock of node A, while another time line with the time variable $t_B$ belongs to a clock of node B. Arrows pointing from one time line to the other indicate a packet transmission from one node to the other. As shown in Fig. 2, Node A sends a data packet comprising a time request to node B at time $T_{S(A)}$. Node B receives the data packet at time $T_{R1(B)}$. After processing the request packet, node B replies as fast as possible and sends at a reply time $T_{R2(B)}$ a data packet containing a receive time stamp marking the receive time $T_{R1(B)}$ back to the sender node A. The data packet with the time stamp is received by node A at time $T_{RR(A)}$. The time difference between $T_{R1(B)}$ and $T_{R2(B)}$ is the processing time on node B and is usually much shorter than the time difference between times $T_{RR(A)}$ and $T_{S(A)}$. Node A collects all measurement results over a certain time period. From the time values in the set a forward transition delay or one-way delay in forward direction is calculated ($OWD_f$) and a backward transition delay or one way delay in backward direction ($OWD_b$) is calculated. This may be done in the same way as proposed in the prior art document WO 2008/138850 A1. It is expressively referred to this prior art reference for the purpose of disclosing the one-way delay measurement process, here. Two sets of measurement results one for the forward one-way delay and the other for the backward one-way delay will be kept in memory.

Fig. 3 presents the actual influence of the described systematical error on results of one-way delay measurements over a period of 5000s. In Fig. 3 the $OWD_f$ measurement results for the forward direction of packet transmissions for the RTT determination is depicted. Variation of delay lies in the range of 0.1-0.4 ms, what is unacceptable for high-accuracy measurements. The proposed solution allows to get rid of this influence as follows.

Basis for correction is an algorithm of linear interpolation between reference points which are determined with the help of ICA. First step within correction procedure is the double applying of ICA, namely at the beginning and at the end of the measurement value set. One small change in regard to ICA as described in WO 2008/138850 A1 is necessary, here. In WO 2008/138850 A1 it is described how to find a stable zone in the measurement values. It is expressively referred to WO 2008/138850 A1 for the purpose of the disclosure of the invention in regard to the ICA process. However, while at the beginning of the data set, the stable delays zone can be determined as described in WO 2008/138850 A1, at the end of the data set this must be done in the backward direction - starting with the last measurement sample, going backward to earlier samples. So, two samples with minimal forward and minimal backward delay will be found one time at the beginning of the data set and another time at the end of the data set. With these *minF* and *minB* results, the best accuracy of the clock offset in that region can be determined, as described in the ICA algorithm. The two values of the clock offset, determined by ICA give the two ordinate points for the following linear interpolation. It is to be noted that the values determined with the formula

$$\Delta \;=\; (\text{minF} \;-\; \text{minB})/2$$

actually correspond to a clock offset, these values however might not always be used for clock synchronisation. The ICA is applied two times here in order to get two pairs of coordinates for interpolation base points, but not primarily for calculating clock offset values.

For the application of linear interpolation method, however also the points in time need to be determined, at which the two clock offsets have to be assumed. However, the ICA in general doesn't return one instant time of the OWD measurement, since the *VirtRTT* is calculated using *minF* and *minB* (of one stable region) which can belong to different probes. It is therefore proposed in one embodiment of the invention to use the instant time in mid between the sending time of the probe, which delivers *minF* and the sending time of the probe, which delivers the *minB* result. However, the time interval between determination of *minF* and *minB* at cases, at which the application of this invention has a significant advantage, will be much shorter than the time interval between the two ICA applications (in this preferred embodiment *beginning and end* of the measurement session). Therefore, positioning of the point in time between the corresponding *minF* and *minB* is not very critical. Once the reference values at two positions of the measurement session and the corresponding points in time are determined, with these two pairs of coordinates, linear interpolation can be applied to each other measurement point of the measured data set. The position of the reference points determined in stable regions at the beginning and end of the measurement session is indicated in Fig. 3 by two dashed lines. The first indicated position corresponds to sample number 27 in the set of measurement results. The second indicated position corresponds to sample number 439417. The whole measurement result set depicted in Fig. 3 consists of 439453 samples in 5000 s.

The exact formula of linear interpolation can be described as follows:

$$D_n = D_{begin} + \frac{D_{end} - D_{begin}}{t_{end} - t_{begin}} \times \left( t_n - t_{begin} \right)$$

Whereby $D_n$ is the clock offset value, by which the OWD result of the *n-th* measurement sample has to be corrected. $D_{begin}$ is the offset, calculated by the ICA at the beginning of a measurement, $D_{end}$ is the offset, calculated by the ICA at the end of the measurement session. $t_{begin}$; $t_{end}$ and $t_n$ are the points in time of the ICA at beginning of the measurement interval, of the ICA at the end of the measurement interval and of the *n-th* measurement sample, as described above. It is pointed out that the respective value $D_n$ is deducted from the actual measurement value $MD_n$ shown in Fig. 3 to achieve the corrected measurement value $CorrD_n$.

$$\text{CorrD}_n \;=\; \text{MD}_n \;-\; D_n$$

Dn is thus the determined systematical error component which will be eliminated in the measurement results.

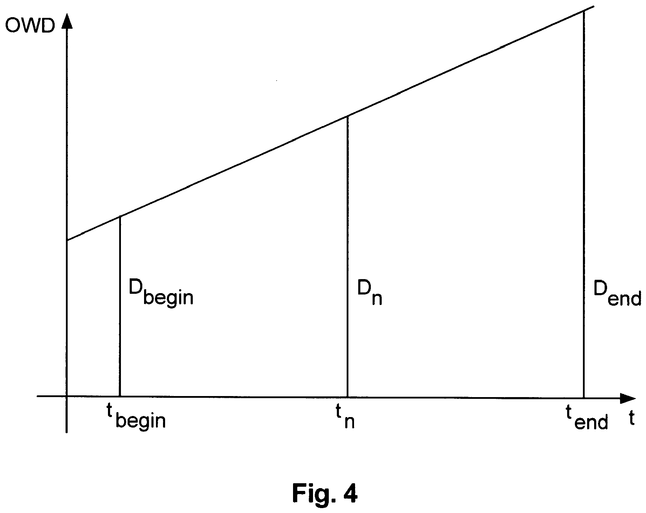

Geometrically, the proposed calculation corresponds to a shearing operation which is illustrated in Fig. 4.

Fig. 5 shows a flow chart for the begin and end point determination function as being part of the mDelay process. The program routine is used for obtaining the interpolation base point coordinates at the beginning of the measurement interval.

The routine starts at program step 50. In step 51 the minF and minB parameters and are set to some initial start value. Preferably minF = minB and a constant value. In step 52 the stable value range at the beginning of the RTT measurement interval is searched. This is performed in the manner as explained in the prior patent application as above mentioned WO 2008/138850 A1. It is expressively referred to this application for the purpose of the disclosure of the invention in this regard. After having determined the stable range, this range will be tested in the following steps. In step 53 the measurement results for the stable range at the beginning of the measurement set are evaluated. For each current sample with a value of a one-way delay in forward direction it is tested if the value CurrSFwV is below the set minF value. If yes, the new minF value will be defined to be equal to the current sample value CurrSFwV. Likewise, the parameter minF_st, which corresponds to the send time of the sample giving the minF value is defined to be equal to the send time of the current sample CurrSFwST. If the test is negative in step 53, the value setting of step 54 is omitted. After that it follows in step 55 the testing of the samples for the backward direction in seek range corresponding to the stable value range. It will be tested if the current sample CurrSBwV for the backward transmission direction is below the minB value. If yes, the new minB value will be defined to be equal to the current sample value CurrSBwV. Likewise, the parameter minB_st, which corresponds to the send time of the sample giving the minB value is defined to be equal to the send time of the current sample CurrSBwST. If the test is negative in step 55, the value setting of step 56 is omitted. Thereafter, the processing of the current samples CurrSFwV and CurrSBwV is done and it follows in step 57 the incrementation of the current sample index value CurrSid. In step 58 it will be tested if the last sample in stable value range has already been processed. This is done by checking if the current sample index CurrSid is below the N+1 value, where the value N corresponds to the number of samples in the stable value region defined in step 51. The process loops back to step 53 if the test is still positive. The processing loop is ended when the test in step 58 brings a negative result. In that case, all sample values in stable seek range at the beginning of the measurement interval have been processed and it follows in step 59 the calculation of the coordinates (X1, Y1) of the reference point for the interpolation at the beginning of the measurement interval. The following formulas are used for determining the coordinates:

$$X1 = (minB\_st + minF\_st)/2$$

$$Y1 = (minF - minB)/2$$

Therein, the X1 coordinate is the sending time value of the sample where the reference point is located and the Y1 coordinate is the determined clock offset value for this reference point according to ICA process.

After having determined the coordinates of the first reference point the same is done for the second reference point. It is noted that the same routine is employed for determining the second reference point. Of course the search for the stable range at the end of the measurement period will happen in step 52 this time. The formulas for determining the coordinates of the second reference point (X2, Y2) are equal to above mentioned formulas.

Fig. 6 shows a flow chart for the measurement value set correction based on interpolation between the reference begin and end points. The routine is entered in step 61. In step 62 the interpolation reference points (X1, Y1) and (X2, Y2) are taken over from the step 1 routine. The interpolation will be performed with either the set of one-way delay measurement values for the forward direction or for the backward direction. The systematical errors should be present in both measurement sets. Therefore, it should be sufficient to make the correction of measurement values in one of the two sets only. If needed it may be useful to perform the interpolation on both measurement sets. The interpolation formula which is applied is used in step 63. The formula is:

$$Yn = Y1 + ((Y2 - Y1)/(X2 - X1)) * (Xn - X1)$$

Where Yn corresponds to the resulting interpolation value for the sample with index n and Xn corresponds to the sending time for the sample with index n. In another embodiment Xn may correspond to the receiving time of the sample Sn. The other values had already been explained above. In step 64, the original measured sample values Sn will be corrected. This is done by deducting the interpolation value Yn from the original measured sample value CurrSn. What is resulting is the corrected sample value CorrSn.

$$CorrSn = CurrSn - Yn$$

The routine for the measured sample value correction ends in step 65.

After eliminating the linear component, caused by systematic error (clock skew), it will be possible to observe, previously invisible effects. A white line in Fig. 7 was obtained with sliding window algorithm with window size of 500 values and illustrates a trend line in the $OWD_f$ measurement set for the forward direction. It has some parabolic-shaped curvature, caused by temperature effects in quartz oscillators. It is now possible to evaluate, how these effects affect obtained delay values. The evaluation shows that in the worst case, temperature effects can change delay values with the rate of $1*10^{-8}$ s within one second of measurement time. This value had been obtained by finding the steepest gradient in the curve. Such accuracy is unreachable by existing state of the art approaches for network delay measurements.

The mDelay process running on host 10 gathers all statistical data (corrected one-way delay values) and sends it to the monitoring server 30 for storing. The network monitoring/testing device for measuring network performance keeps track of all this data and evaluates them. Such a device is helping to optimize the data throughput in a network by adjusting the delay times in between two packet transmissions and the data rate. The aim is to utilize the available network bandwidth in optimized fashion while at the same time congestion shall be avoided. This adjustment process may be repeated periodically, e.g. every $5^{th}$ set of network delay evaluation right after the end of measuring and evaluating the data with mDelay process. As the management of QoS in the Internet is becoming more and more advanced, the described method might also be used in sophisticated Quality of Service (QoS) managers. Later on, the monitoring server could command a certain host 10 to take an action, e.g. reducing or increasing the data rate for data transport to particular other host 10. For the communication between monitoring server 30 and host 10, there is a plugin existing on the monitoring server 30.

If the analysis of OWD measurement results is also used for clock synchronisation, in the network stations, it should be sufficient to this e.g. every $5^{th}$ set of network delay measurement interval, right after the end of the mesurement set evaluation, since the clock skew normally is not that high that a great effect is seen in e.g. 30 min.

In addition to the preferred embodiment described above, some modifications are particularly mentioned below which shall be regarded as part of the invention:

The determination of reference points between which interpolation is being performed was reduced to two values only, one at the beginning and one at the end of the measurement result set. In one modification there may be further reference points determined between the beginning and end of measurement result set thus dividing the measurement result set into different sections. The interpolation would be done separately for each section then.

A straight line linear interpolation has been used in the preferred embodiment. An alternative is to use a higher order polynom interpolation method, e.g. Spline-interpolation.

Another deviation from the described method is also of interest - for long term measurements, division of the time scale into a number of time intervals (e.g. with the duration of 30 minutes) can be applied at the beginning and at the end of each such time interval (whereby besides the very first and very last point in time, the end point of one interval is the beginning point of the next interval). Now, the time offset can be determined at the borders of each interval. Consequently, based on offset calculations at the borders of each interval, the linear interpolation of OWD measurement results will be applied independently for each time interval. On a more sophisticated embodiment, the width of the time interval at the ends of which the time offset will be calculated, can be changed depending on the stability of the measurement results.

The features of the invention as disclosed in the above description, in the claims and in the drawing may be of importance for the implementation of the various embodiments of the invention both individually and in any desired combination.

## Claims

1. Method for eliminating systematical error components in a set of forward one-way delay measurement results and/or in a set of backward one-way delay measurement results for communications between two computing systems (10) of a communication network, wherein a clock offset between the clocks of the two computing systems (10) is estimated for two reference points ($t_{begin}$, $D_{begin}$; $t_{end}$, $D_{end}$) located in two stable regions in the set of one-way delay measurement results, one time at the beginning of the one-way delay measurement result set and another time at the end of the one-way delay measurement result set; wherein for determining a reference point in both of said two stable regions of said set of one-way delay measurement results a step of determining a minimum forward one-way delay (minF) is performed in the set of forward one-way delay measurement results and a step of determining a minimum backward one-way delay (minB) is performed in the set of backward one-way delay measurement results in said stable region according to an algorithm called improved Cristian algorithm, and wherein the clock offset estimation for said reference point in said stable region is performed by a combination of said determined two corresponding values minimum forward one-way delay (minF) and minimum backward one-way delay (minB) in said stable region, and wherein further on a step of performing an interpolation between said two reference points ($t_{begin}$, $D_{begin}$; $t_{end}$, $D_{end}$) is carried out to determine the clock offset values $D_n$ for the one-way delay measurement results other than at said two reference points ($t_{begin}$, $D_{begin}$; $t_{end}$, $D_{end}$) in the set and wherein the systematical error components in the set of one-way delay measurement results are eliminated with a step of deducting the interpolated clock offset value $D_n$ from the corresponding actual one-way delay measurement result $MD_n$ in the set according to the formula

$$CorrD_n = MD_n - D_n.$$

2.  Method according to claim 1, **characterized in that** the interpolation step consists of a linear interpolation with a straight line.

3.  Method according to claim 2, wherein the linear interpolation with a straight line is based on the following formula:

$$D_n = D_{begin} + \frac{D_{end} - D_{begin}}{t_{end} - t_{begin}} \times \left(t_n - t_{begin}\right)$$

wherein $D_n$ is the clock offset value, for the one-way delay result of the n-th measurement sample; $D_{begin}$ is the clock offset for the first reference point, estimated for the beginning of a measurement result set; $D_{end}$ is the clock offset, for the second reference point estimated for the end of the measurement result set; and $t_{begin}$; $t_{end}$ and $t_n$ are the points in time of the first reference point, of the second reference point and of the n-th measurement sample.

4.  Method according to claim 3, wherein the time points $t_{begin}$ and $t_{end}$ for the clock offset values $D_{begin}$ and $D_{end}$ are determined by finding the mid value in the interval that is made up of the two time values for the determined minimum forward one-way delay (minF) and minimum backward one-way delay (minB) determined in the associated stable region of measurement samples.

5.  Method according to claim 1, **characterized in that** the interpolation step consists of an interpolation with a polynom, in particular in the form of spline interpolation.

6.  Apparatus adapted to perform all the steps of the method according to one of the previous claims.

7.  Computer program product having stored thereon program code which when run in a computing system (10) of a communication network, causes said computing system (10) to perform all the steps of the method according to one of the claims 1 to 5.

**Patentansprüche**

1.  Verfahren zur Beseitigung von systematischen Fehlerkomponenten in einem Satz von Einweg-Verzögerungsmessresultaten in Vorwärtsrichtung und/oder in einem Satz von Einweg-Verzögerungsmessresultaten in Rückwärtsrichtung für die Kommunikation zwischen zwei Rechnersystemen (10) eines Kommunikationsnetzes, wobei ein Zeitversatz zwischen den Uhren der beiden Rechnersysteme (10) für zwei Referenzpunkte ($t_{begin}$, $D_{begin}$; $t_{end}$, $D_{end}$) geschätzt wird, die sich in zwei stabilen Bereichen im Satz der Einweg-Verzögerungsmessresultate befinden, einmal am Anfang des Satzes der Einweg-Verzögerungsmessresultate und zum anderen am Ende des Satzes der Einweg-Verzögerungsmessresultate; wobei zur Bestimmung eines Referenzpunktes in beiden der besagten zwei stabilen Bereiche des Satzes von Einweg-Verzögerungsmessresultaten ein Schritt zur Bestimmung einer minimalen Vorwärts-Einweg-Verzögerung (minF) in dem Satz von Einweg-Verzögerungsmessresultaten und ein Schritt zur Bestimmung einer minimalen Rückwärts-Einweg-Verzögerung (minB) in dem Satz von Rückwärts-Einweg-Verzögerungsmessresultaten in dem stabilen Bereich gemäß einem Algorithmus durchgeführt wird, der als verbesserter Cristian-Algorithmus bezeichnet wird, und wobei die Zeitversatz Schätzung für besagten Referenzpunkt in dem genannten stabilen Bereich durch eine Kombination der genannten festgelegten zwei korrespondierenden Werte minimale Vorwärts-Einweg-Verzögerung (minF) und minimale Rückwärts-Einweg-Verzögerung (minB) in dem stabilen Bereich durchgeführt wird, und wobei ferner eine Interpolation zwischen den beiden Referenzpunkten ($t_{begin}$,

$D_{begin}$; $t_{end}$, $D_{end}$) in einem Schritt durchgeführt wird, um die Zeitversatzwerte $D_n$ für die Einweg-Verzögerungsmessresultate anders als an den beiden Referenzpunkten ($t_{begin}$, $D_{begin}$; $t_{end}$, $D_{end}$) in dem Satz zu bestimmen, und wobei die systematischen Fehlerkomponenten in dem Satz von Einweg-Verzögerungsmessresultaten eliminiert werden, mit einem Schritt des Abziehens des interpolierten Taktversatzwertes $D_n$ von dem entsprechenden tatsächlichen Einweg-Verzögerungsmessresultat $MD_n$ in dem Satz gemäß der Formel

$$\texttt{CorrD}_n \ = \ \texttt{MD}_n \ - \ \texttt{D}_n .$$

2. Verfahren nach Anspruch 1, **dadurch gekennzeichnet, dass** der Interpolationsschritt aus einer linearen Interpolation mit einer geraden Linie besteht.

3. Verfahren nach Anspruch 2, wobei die lineare Interpolation mit einer geraden Linie auf der folgenden Formel basiert:

$$D_n = D_{begin} + \frac{D_{end} - D_{begin}}{t_{end} - t_{begin}} \times \left( t_n - t_{begin} \right)$$

wobei $D_n$ der Zeitversatzwert ist, für das Einweg-Verzögerungsresultat der n-ten Messprobe; $D_{begin}$ ist der Zeitversatz für den ersten Referenzpunkt, der für den Beginn eines Messresultatsatzes geschätzt wurde; $D_{end}$ ist der Zeitversatz für den zweiten Referenzpunkt, der für das Ende des Messresultatsatzes geschätzt wurde; und $t_{begin}$; $t_{end}$ und $t_n$ sind die Zeitpunkte des ersten Referenzpunktes, des zweiten Referenzpunktes und der n-ten Messprobe.

4. Verfahren nach Anspruch 3, wobei die Zeitpunkte $t_{begin}$ und $t_{end}$ für die Zeitversatzwerte $D_{begin}$ und $D_{end}$ bestimmt werden, indem der Mittelwert in dem Intervall ermittelt wird, das sich aus den beiden Zeitwerten für die ermittelte minimale Vorwärts-Einweg-Verzögerung (minF) und die minimale Rückwärts-Einweg-Verzögerung (minB) zusammensetzt, die in dem zugehörigen stabilen Bereich von Messproben bestimmt wurden.

5. Verfahren nach Anspruch 1, **dadurch gekennzeichnet, dass** der Interpolationsschritt aus einer Interpolation mit einem Polynom, insbesondere in Form einer Spline-Interpolation, besteht.

6. Vorrichtung, die so ausgelegt ist, alle Schritte des Verfahrens nach einem der vorhergehenden Ansprüche auszuführen.

7. Computerprogrammprodukt mit darauf gespeicherten Programmcode, der, wenn in einem Rechnersystem (10) eines Kommunikationsnetzes ausgeführt, bewirkt, dass das genannte Rechnersystem (10) alle Schritte des Verfahrens gemäß einem der Ansprüche 1 bis 5 ausführt.

**Revendications**

1. Procédé d'élimination de composantes d'erreur systématique dans un ensemble de résultats de mesure de retard unidirectionnel avant et/ou dans un ensemble de résultats de mesure de retard unidirectionnel arrière pour des communications entre deux systèmes informatiques (10) d'un réseau de communication, dans lequel un décalage d'horloge entre les horloges des deux systèmes informatiques (10) est estimé pour deux points de référence ($t_{begin}$, $D_{begin}$ ; $t_{end}$, $D_{end}$) situés dans deux régions stables dans l'ensemble de résultats de mesure de retard unidirectionnel, une fois au début de l'ensemble de résultats de mesure de retard unidirectionnel et une autre fois à la fin de l'ensemble de résultats de mesure de retard unidirectionnel ; dans lequel pour déterminer un point de référence à la fois dans lesdites deux régions stables dudit ensemble de résultats de mesure de retard unidirectionnel, une étape de détermination d'un retard unidirectionnel avant minimal (minF) est réalisée dans l'ensemble de résultats de mesure de retard unidirectionnel avant et une étape de détermination d'un retard unidirectionnel arrière minimal (minB) est réalisée dans l'ensemble de résultats de mesure de retard unidirectionnel arrière dans ladite région stable en fonction d'un algorithme appelé algorithme de Cristian amélioré, et dans lequel l'estimation de décalage d'horloge pour ledit point de référence dans ladite région stable est réalisée par une combinaison desdites deux valeurs correspondantes déterminées de retard unidirectionnel avant minimal (minF) et retard unidirectionnel arrière minimal (minB) dans ladite région stable, et dans lequel une étape de réalisation d'une interpolation entre lesdits deux points de référence ($t_{begin}$, $D_{begin}$ ; $t_{end}$, $D_{end}$) est ensuite effectuée pour déterminer les valeurs de décalage d'horloge $D_n$ pour les résultats de mesure de retard unidirectionnel autres qu'au niveau desdits deux points de référence ($t_{begin}$,

$D_{begin}$ ; $t_{end}$, $D_{end}$) dans l'ensemble et dans lequel les composantes d'erreur systématique dans l'ensemble de résultats de mesure de retard unidirectionnel sont éliminées avec une étape de déduction de la valeur de décalage d'horloge interpolée $D_n$ du résultat de mesure de retard unidirectionnel réel correspondant $MD_n$ dans l'ensemble en fonction de la formule

$$\text{CorrD}_n = \text{MD}_n - \text{D}_n.$$

**2.** Procédé selon la revendication 1, **caractérisé en ce que** l'étape d'interpolation est constituée d'une interpolation linéaire avec une ligne droite.

**3.** Procédé selon la revendication 2, dans lequel l'interpolation linéaire avec une ligne droite se base sur la formule suivants :

$$D_n = D_{begin} + \frac{D_{end} - D_{begin}}{t_{end} - t_{begin}} \times (t_n - t_{begin})$$

dans laquelle $D_n$ est la valeur de décalage d'horloge pour le résultat de retard unidirectionnel du n-ième échantillon de mesure ; $D_{begin}$ est le décalage d'horloge pour le premier point de référence, estimé pour le début d'un ensemble de résultats de mesure ; $D_{end}$ est le décalage d'horloge pour le second point de référence, estimé pour la fin de l'ensemble de résultats de mesure ; et $t_{begin}$ ; $t_{end}$ et $t_n$ sont les points dans le temps du premier point de référence, du second point de référence et du n-ième échantillon de mesure.

**4.** Procédé selon la revendication 3, dans lequel les points dans le temps $t_{begin}$ et $t_{end}$ pour les valeurs de décalage d'horloge $D_{begin}$ et $D_{end}$ sont déterminés en trouvant la valeur médiane dans l'intervalle qui est constitué des deux valeurs dans le temps pour les retard unidirectionnel avant minimal (minF) et retard unidirectionnel arrière minimal (minB) déterminés, déterminées dans la région stable associée d'échantillons de mesure.

**5.** Procédé selon la revendication 1, **caractérisé en ce que** l'étape d'interpolation est constituée d'une interpolation avec un polynôme, notamment sous la forme d'une interpolation par splines.

**6.** Appareil adapté à réaliser toutes les étapes du procédé selon une des revendications précédentes.

**7.** Produit de programme informatique ayant stocké sur lui du code de programme qui, lors de son exécution dans un système informatique (10) d'un réseau de communication, amène ledit système informatique (10) à réaliser toutes les étapes du procédé selon une des revendications 1 à 5.

**Fig. 1**

Host
mDelay is running
S1
S2
CLK
11
12

**Fig. 2**

**Fig. 3**

**Fig. 4**

**Fig. 5**

Start — 61

x-axis is send time

y-axis is $OWD_F$ or $OWD_B$

Interpolation Base Points

are (X1;Y1) an (X2;Y2) — 62

$Y_n = Y1 + ((Y2-Y1)/(X2-X1)) \cdot (X_n - X1)$ — 63

$CorrS_n = CurrS_n - Y_n$ — 64

End — 65

**Fig. 6**

**Fig. 7**

**REFERENCES CITED IN THE DESCRIPTION**

**Patent documents cited in the description**

- US 6769029 B1
- WO 2008138850 A1
- US 6438702 B1
- US 20100185781 A

**Non-patent literature cited in the description**

- The Network Time Protocol (Version 3) Specification, Implementation and Analysis. **D.L. MILL.** RFC 1305. IEFT, March 1992
- Efficient tracing and performance analysis for large distributed systems. **ANDERSON E ; HOOVER C ; XIAOZHOU LI ; TUCEK J.** Modeling, Analysis&Simulation of Computer and Telecommunication Systems, 2009. MASCOTS '09. IEEE International Symposium on. IEEE, 21 September 2009